# EUROPEAN PATENT SPECIFICATION

(11) **EP 4 262 365 B1**
(45) Date of publication and mention of the grant of the patent: **06.05.2026**
(21) Application number: 21834967.8
(22) Date of filing: 14.12.2021
(51) Int. Cl.: A01K 1/00, A01K 1/12

(54) **MILKING INSTALLATION FOR PERFORMING BATCHWISE MILKING OF GROUPS OF ANIMALS**
MELKANLAGE ZUM CHARGENWEISEN MELKEN VON GRUPPEN VON TIEREN
INSTALLATION DE TRAITE POUR EFFECTUER UNE TRAITE PAR LOTS DE GROUPES D'ANIMAUX

(30) Priority: 15.12.2020 SE 2051461
(43) Date of publication of application: 25.10.2023
(73) Proprietor: DeLaval Holding AB, 147 21 Tumba (SE)
(72) Inventor: JENSEN, Robert, 147 21 Tumba (SE); PALMQVIST, Martin, 147 21 Tumba (SE)
(74) Representative: DeLaval International AB
(86) International application number: PCT/SE2021/051251
(87) International publication number: WO 2022/132007

(56) References cited:
- WO-A1-2020/236066
- US-A1- 2006 249 083

## Description

### TECHNICAL FIELD

The present invention relates to a milking installation configured to perform batchwise milking of one group of animals per batch.

### BACKGROUND

Cows may be milked in milking parlors housing several milking stalls and associated milking equipment. Typically, the cows are admitted into the parlor in batches and occupy respective stalls during milking. The stalls are usually stationary although there are also known rotary or carousel milking installations in which the stalls are located on a platform which is rotated continuously so that cows can enter respective stalls at an entrance location and be milked whilst being conveyed around on the platform to an exit location where the milked cows can leave the rotating platform.

As an alternative to the above, fully automatic robotic milking systems exist, wherein cows can, at their own volition, enter a milking stall where they can be supplied some feed stuff and can be milked without any direct human supervision of the milking process.

These robotic milking systems can indeed be very efficient.

However, it has been found that cow behavior, e.g. due to the herd hierarchy and pecking order, and the time taken for cows to reach or to be brought to the vicinity of the milking stall can sometimes interfere with the efficient operation of the milking installation and reduce its capacity in terms of the number of milkings achieved per day. Therefore, a milking installation where milking is performed on a fully voluntary basis may not be optimal.

WO 2008/003341 reveals a milking installation that includes a rotary platform for transporting animals to fully automated milking stalls. The animals are allowed to board the rotating platform at a loading zone and to disembark the platform at an available milking stall under the control of gates located around the platform.

EP 3 214 923 shows a device for automatically milking fluid from udders of animals of a herd of cows in a time-specifiable manner. The device contains a plurality of milking robots arranged on a base for automatically milking animals, wherein each milking robot has an inlet and an outlet and a milking cluster that can be automatically attached to the udder of an animal. The device further comprises a fenced waiting area located upstream of the inlets of the milking robots for the animals of a herd to be milked, wherein the waiting area has an entrance for manually delivering the animals to the waiting area. The device has an animal driver unit for automatically herding animals located in the waiting area to the inlets of respective milking robots that are becoming available.

US 2006/249083 A1 and WO 2020/236066 A1 disclose milking installations where the cows are compelled by a movable barrier to move towards milking robots.

Thus, solutions are known, which aim at using the milking equipment in an efficient manner. However, there is room for further enhancement of the utilization of the milking robots.

### SUMMARY

The object of the present invention is therefore to offer a solution that solves the above problem and enables an improved throughput of milking animals per unit time for a given set of milking robots.

According to the invention, the object is achieved according to claim 1 by a milking installation configured to perform batchwise milking of one group of animals per batch. The milking installation includes a set of milking robots, an enclosure and a movable barrier.

The set of milking robots adjoins the enclosure, which is configured to keep the group of animals, and from which enclosure individual animals in the group of animals are provided access to each milking robot in the set of milking robots on a voluntary basis. The movable barrier is configured to move in a first direction over the enclosure so as to compel the individual animals in the group of animals to move in the first direction relative to the set of milking robots. The milking robots in the set of milking robots are arranged along at least one straight line and the movable barrier is configured to take different positions at the enclosure so as to in at least one of these positions prevent the individual animals in the group of animals from reaching at least one milking robot in the set of milking robots.

The above milking installation is advantageous because it renders it straightforward to steer the milking animals in a manner that results in a high overall utilization of the milking robots. Namely, the movable barrier may encourage individual animals to go towards certain milking robots, for example to increase the throughput, or to have the animals milked by a specific subset of milking robots. The movable barrier also allows for a new group of animals to enter the enclosure without mixing with the group which is already there, and thus reduce a total vacancy time in the milking robots. Moreover, by avoiding mixing of groups in the enclosure, the overall stress level of the animals can be kept relatively low because no animal needs to encounter an unknown animal in the limited space represented by the enclosure. Thus, the risk is reduced that low ranked animals are held off from milking long time.

According to the invention, the movable barrier extends across a full width of the enclosure. In a first position, the movable barrier is configured to prevent the individual animals in the group of animals from exiting the enclosure without passing one of the milking robots in the set of milking robots. In other words, the movable barrier may push one or more animals to initiate milking, and thus speed up the milking process.

According to the invention, in a second position, the movable barrier is configured to prevent the individual animals in the group of animals from accessing a first subset of the set of milking robots. The second position is located downstream of the first position with respect to the first direction. Thereby, it is possible for a new group of animals to enter the enclosure upstream of the movable barrier, and be serviced by the first subset of the set of milking robots while an earlier group of animals is being serviced by milking robots located downstream of the movable barrier.

According to the invention, in a third position, the movable barrier is configured to prevent the individual animals in the group of animals from accessing a second subset. Here, the second subset includes the first subset, and the third position is located downstream of the second position with respect to the first direction. Consequently, individual animals may be guided further towards specific milking robots.

According to the invention, a complementary set to the second subset of the set of milking robots contains at least one milking robot that is located downstream of the movable barrier when the movable barrier takes the third position and that is configured to process extracted milk according to a special routine, which is different from a standard routine applied by the milking robots in the second subset to process extracted milk. For example, the special routine may involve taking a milk sample for analysis, and/ or forwarding the extracted milk to a storage tank being physically separated from a storage tank to which the extracted milk is forwarded according to the standard routine. This means that a milking robot in the complementary set may be used for milking animals whose milk must be separated from the other animals' milk, for instance due to medical conditions.

According to an embodiment of the invention, the movable barrier is configured to move in a second direction over the enclosure, which second direction is opposite to the first direction.

It is generally preferred if the movable barrier is configured to be raised to an elevated position; and when the movable barrier is raised to the elevated position, the individual animals in the group of animals are allowed to pass freely under the movable barrier. Further preferably, the movable barrier is configured to move in the second direction over the enclosure when the movable barrier is raised to the elevated position, because thereby the movable barrier may be retracted to a starting position without influencing the animal movements. Hence, the risk is minimized that any animals are pushed in an undesired direction, and the milking installation may be operated in a speedy and efficient manner.

According to still another embodiment of the invention, the movable barrier is configured to be moved in the first direction in response to manual handling by an operator and/or an automatic action effected by a drive mechanism. Thus, the movable barrier may be moved by a farmer pulling it along a pair of rails, by an electric motor causing it to be moved, or by a combination thereof.

According to a further embodiment of the invention, the milking installation contains an exit passage that is connected to each milking robot in the set of milking robots. The exit passage allows the individual animals in the group of animals to leave the milking robots after completed milk extraction without re-entering the enclosure. Consequently, both the milking robots and the enclosure can be used very efficiently.

According to yet another embodiment of the invention, the enclosure is connected to at least one stall area so as to allow animals to pass from the at least one stall area to the enclosure. Although, technically, this passage may be entirely voluntary, it is normally preferably if a human operator guides the animals from the stall area to the enclosure and the milking robots.

According to another embodiment of the invention, the exit passage is further connected to the at least one stall area so as to allow the group of animals to move to the at least one stall area after having completed milk extraction via the set of milking robots. This means that each milked animals may return to its own stall area on a voluntary basis after that the milking has been completed. To this aim, the entrance gates to each stall area is preferably equipped with a transponder reader configured to exclusively allow animal with an authorized transponder to enter a given stall area. Preferably, for efficient automatic guiding of the animals, the entrance gate forms part of a so-called sort gate.

According to another aspect but not according to the invention, the object is achieved by a method of performing batchwise milking of one group of animals per batch. The method involves receiving the group of animals in an enclosure adjoining a set of milking robots. The enclosure provides access for individual animals in the group of animals to each milking robot in the set of milking robots on a voluntary basis. A movable barrier is configured to move in a first direction over the enclosure so as to compel the individual animals in the group of animals to move in the first direction relative to the set of milking robots. The milking robots in the set of milking robots are arranged along at least one straight line. The method further involves moving the movable barrier to different positions at the enclosure so as to in at least one of said positions prevent the individual animals in the group of animals from reaching at least one milking robot in the set of milking robots. The advantages of this method, as well as the preferred embodiments thereof, are apparent from the discussion above with reference to the proposed control unit.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a milking installation according to a first embodiment of the invention;
- Figures 2a-b: show how a movable barrier may be moved over an enclosure for a group of animals according to one embodiment of the invention;
- Figure 3: schematically illustrates a milking installation according to a second embodiment of the invention;
- Figure 4: shows an example of how stall areas may be connected to the milking installation according to one embodiment of the invention; and
- Figure 5: illustrates, by means of a flow diagram, a method of performing batchwise milking.

### DETAILED DESCRIPTION

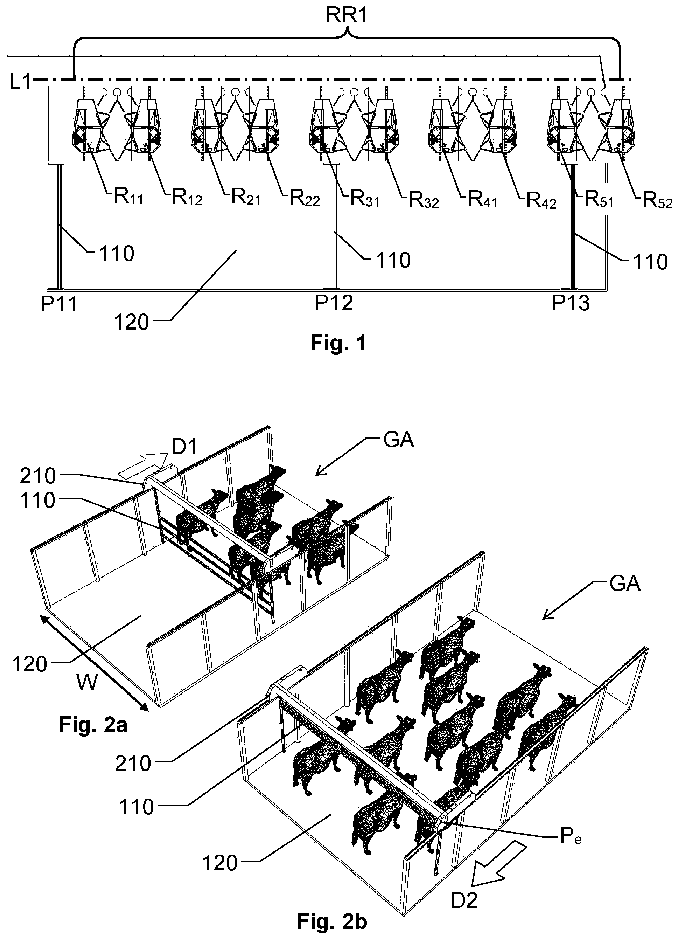

In Figure 1, we see a schematic illustration of a milking installation according to a first embodiment of the invention. Figure 2a shows how a movable barrier 110 may be moved in a first direction D1 over an enclosure 120 for a group of animals GA.

According to the invention, the milking installation is configured to perform batchwise milking. This means that one group of animals GA per batch is milked. As will be explained below, each group of animals GA may be located in a particular stall area between the milkings.

The milking installation includes the enclosure 120, the movable barrier 110 and a set of milking robots RR1, which in the embodiment of the invention shown in Figure 1, contains milking robots R₁₁, R₁₂, R₂₁, R₂₂, R₃₁, R₃₂, R₄₁, R₄₂, R₅₁ and R₅₂ that are arranged along a straight line L1. The set of milking robots RR1 adjoins the enclosure 120 for the group of animals GA, and individual animals in the group of animals GA are provided access to each of the milking robots R₁₁, R₁₂, R₂₁, R₂₂, R₃₁, R₃₂, R₄₁, R₄₂, R₅₁ and R₅₂ respectively from the enclosure 120 on a voluntary basis. In other words, when located in the enclosure 120, an animal in the group of animals GA may enter a vacant milking robot R₁₁, R₁₂, R₂₁, R₂₂, R₃₁, R₃₂, R₄₁, R₄₂, R₅₁ or R₅₂ in the set of milking robots RR1 at any time.

The movable barrier 110 is configured to move in a first direction D1 over the enclosure 120 so as to compel the individual animals in the group of animals GA to move in the first direction D1 relative to the set of milking robots RR1. Preferably, the movable barrier 110 is steplessly movable, for instance by a set of suspension wheels rolling on a pair of rails arranged along the sides of the enclosure 120 as illustrated in Figures 2a and 2b. The movable barrier 110 may be configured to be moved in the first direction D1 in response to manual handling by an operator, in response to an automatic action effected by a drive mechanism, or a combination thereof. In any case, the movable barrier 110 is configured to take different positions at the enclosure 120, so as to in at least one of these positions prevent the individual animals in the group of animals GA from reaching at least one of the milking robots R₁₁, R₁₂, R₂₁, R₂₂, R₃₁, R₃₂, R₄₁, R₄₂, R₅₁ and/or R₅₂ in the set of milking robots RR1.

According to the invention, the movable barrier 110 therefore extends across a full width W of the enclosure 120, as illustrated in Figure 2a. Figure 1 shows first, second and third positions P11, P12 and P13 respectively for the movable barrier 110 at the enclosure 120. In the first position P11, the movable barrier 110 is configured to prevent the individual animals in the group of animals GA from exiting the enclosure 120 without passing one of the milking robots R₁₁, R₁₂, R₂₁, R₂₂, R₃₁, R₃₂, R₄₁, R₄₂, R₅₁ and R₅₂ in the set of milking robots RR1. Thus, once the movable barrier 110 has been advanced to the first position P11, no animal in the group of animals GA may leave the enclosure 120 without being milked - however at a point in time determined on a voluntary basis.

In the second position P12, the movable barrier 110 is configured to prevent the individual animals in the group of animals GA from accessing a first subset of the set of milking robots RR1. In Figure 1, the first subset is exemplified by the milking robots R₁₁, R₁₂, R₂₁ and R₂₂. The second position P12 is located downstream of the first position P11 with respect to the first direction D1. I.e., the movable barrier 110 reaches the second position P12 by continuing to move in the first direction D1 along the enclosure 120 from the first position P11. It may be advantageous to force the individual animals in the group of animals GA to advance along the enclosure this way. Namely, thereby another group of animals can be provided access to the milking robots R₁₁, R₁₂, R₂₁ and R₂₂ in the first subset, and the overall throughput of the milking installation may be increased.

In the third position P13, the movable barrier 110 is configured to prevent the individual animals in the group of animals GA from accessing a second subset of the set of milking robots RR1. In Figure 1, the second subset of the set of milking robots RR1 is exemplified by the milking robots R₁₁, R₁₂, R₂₁, R₂₂, R₃₁, R₃₂, R₄₁ and R₄₂. Due to the arrangement of the milking robots along the straight line L1 and the linear movement of the movable barrier 110 in the first direction D1 along the enclosure 120, the second subset includes the first subset. For the same reason, the third position P13 is located downstream of the second position P12 with respect to the first direction D1.

A complementary set of milking robots to the second subset of the set of milking robots R₁₁, R₁₂, R₂₁, R₂₂, R₃₁, R₃₂, R₄₁ and R₄₂ contains the milking robots R₅₁ and R₅₂ that are located downstream of the movable barrier 110 when the movable barrier 110 takes the third position P13. According to the invention, the milking robots R₅₁ and R₅₂ in the complementary set are configured to process extracted milk according to a special routine different from a standard routine applied by the milking robots in the second subset to process extracted milk. For example, the special routine may involve taking a milk sample and analyzing the same. Alternatively, or additionally, the special routine may involve forwarding the extracted milk to a storage tank being physically separated from a storage tank to which the extracted milk is forwarded according to the standard routine.

Consequently, the milking robots R₅₁ and R₅₂ in the complementary set may be employed for milking animals whose milk must be separated from the other animals' milk, for instance due to medical conditions.

The movable barrier 110 may be configured to move in a second direction D2 over the enclosure 120, which second direction D2 is opposite to the first direction D1. Analogous to the movement in the first direction D1, the movable barrier 110 may preferably be moved in the second direction D2 in response to manual handling by an operator, in response to an automatic action effected by a drive mechanism, or a combination thereof.

To reduce the risk that the movement of the movable barrier 110 in the second direction D2 causes undesired animal movements, i.e. against the first direction D1, it is preferable if the movable barrier 110 is configured to be raised to an elevated position Pₑ, as illustrated in Figure 2b, and the elevated position Pₑ, is such that the individual animals in the group of animals GA are allowed pass freely under the movable barrier 110 when the movable barrier 110 is raised to the elevated position Pₑ. It is further preferable if the movable barrier 110 is raised to the elevated position when being moved in the second direction D2 over the enclosure 120.

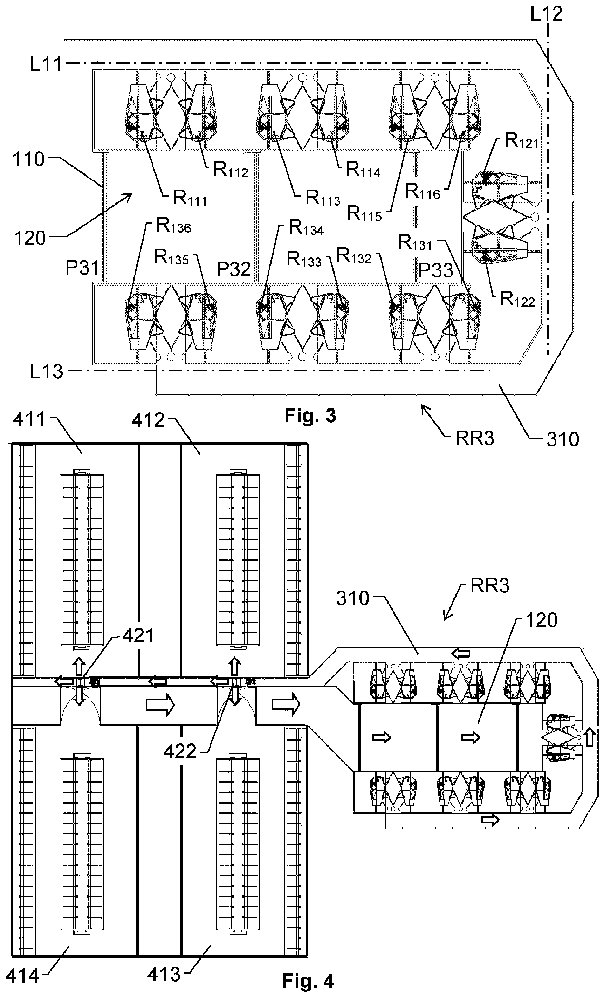

Figure 3 schematically illustrates a milking installation according to a second embodiment of the invention, which milking installation is configured to perform batchwise milking of one group of animals GA per batch.

Analogous to the first embodiment of the invention shown in Figu-re 1, also here a set of milking robots RR3 adjoins an enclosure 120 for the group of animals GA; and from the enclosure 120, individual animals in the group of animals GA are provided access to each milking robot R₁₁₁, R₁₁₂, R₁₁₃, R₁₁₄, R₁₁₅, R₁₁₆, R₁₂₁, R₁₂₂, R₁₃₁, R₁₃₂, R₁₃₃, R₁₃₄, R₁₃₅ and R₁₃₆ in the set of milking robots RR3 on a voluntary basis.

The movable barrier 110 is configured to move in the first direction D1 over the enclosure 120 so as to compel the individual animals in the group of animals GA to move in the first direction D1 relative to the set of milking robots RR3. Here, the milking robots R₁₁₁, R₁₁₂, R₁₁₃, R₁₁₄, R₁₁₅, R₁₁₆, R₁₂₁, R₁₂₂, R₁₃₁, R₁₃₂, R₁₃₃, R₁₃₄, R₁₃₅ and R₁₃₆ in the set of milking robots RR3 are arranged along three straight lines L11, L12 and L13 respectively. The movable barrier 110 is configured to take different positions at the enclosure 120 so as to in at least one of these positions prevent the individual animals in the group of animals GA from reaching at least one milking robot R₁₁₁, R₁₁₂, R₁₁₃, R₁₁₄, R₁₁₅, R₁₁₆, R₁₂₁, R₁₂₂, R₁₃₁, R₁₃₂, R₁₃₃, R₁₃₄, R₁₃₅ and R₁₃₆ in the set of milking robots RR3. The movable barrier 110 extends across the full width W of the enclosure 120. Figure 3 shows positions for the movable barrier 110 in the form of a first position P31, a second position P32 and a third position P33 respectively.

In the first position P31, the movable barrier 110 is configured to prevent the individual animals in the group of animals GA from exiting the enclosure 120 without passing one of the milking robots R₁₁₁, R₁₁₂, R₁₁₃, R₁₁₄, R₁₁₅, R₁₁₆, R₁₂₁, R₁₂₂, R₁₃₁, R₁₃₂, R₁₃₃, R₁₃₄, R₁₃₅ and R₁₃₆ in the set of milking robots RR3. In the second position P32, the movable barrier 110 is configured to prevent the individual animals in the group of animals GA from accessing a first subset R₁₁₁, R₁₁₂, R₁₃₅ and R₁₃₆ of the set of milking robots RR3. The second position P32 is located downstream of the first position P31 with respect to the first direction D1. In the third position P33, the movable barrier 110 is configured to prevent the individual animals in the group of animals GA from accessing a second subset R₁₁₁, R₁₁₂, R₁₁₃, R₁₁₄, R₁₁₅, R₁₃₂, R₁₃₃, R₁₃₄, R₁₃₅, and R₁₃₆ of the set of milking robots RR3. The second subset contains the first subset, and the third position P33 is located downstream of the second position P32 with respect to the first direction D1.

Analogous to the first embodiment of the invention, a complementary set to the second subset R₁₁₁, R₁₁₂, R₁₁₃, R₁₁₄, R₁₁₅, R₁₃₂, R₁₃₃, R₁₃₄, R₁₃₅ and R₁₃₆ of the set of milking robots RR3 contains the milking robots R₁₁₆, R₁₂₁, R₁₂₂ and R₁₃₁ that are configured to process extracted milk according to a special routine different from a standard routine applied by the milking robots in the second subset to process extracted milk. The milking robots R₁₁₆, R₁₂₁, R₁₂₂ and R₁₃₁ in the complementary set are configured to process extracted milk according to a special routine different from a standard routine applied by the milking robots in the second subset to process extracted milk. For example, the special routine may involve taking a milk sample and analyzing the same. Alternatively, or additionally, the special routine may involve forwarding the extracted milk to a storage tank being physically separated from a storage tank to which the extracted milk is forwarded according to the standard routine.

According to one embodiment of the invention, the milking installation contains an exit passage 310, which is connected to each milking robot R₁₁₁, R₁₁₂, R₁₁₃, R₁₁₄, R₁₁₅, R₁₁₆, R₁₃₁, R₁₃₂, R₁₃₃, R₁₃₄, R₁₃₅ and R₁₃₆ in the set of milking robots RR3. The exit passage 310 allows the individual animals in the group of animals GA to leave the milking robots after completed milk extraction without re-entering the enclosure 120. This means that, if the milking robot is of a one-way go-through design, an entry side of the milking robot faces the enclosure 120 and an exit side of the milking robot faces the exit passage 310.

Referring now to Figure 4, we see an example of how first, second, third and fourth stall areas 411, 412, 413 and 414 are connected to the milking installation according to one embodiment of the invention. Here, a passage way connects the enclosure 120 to the stall areas 411, 412, 413 and 414 so that animals are allowed to pass from each of the stall areas 411, 412, 413 and 414 respectively to the enclosure 120. Preferably, a number of gates, manual and/or automatic are arranged in the passage way to direct the animals towards the enclosure 120 in a desired manner.

For example, the exit passage 310 may be further connected to the stall areas 411, 412, 413 and 414 so as to, after completed milking, allow the individual animals in the group of animals GA to move to the stall area 411, 412, 413 or 414 respectively where the group of animals GA is lodged between milkings. Specifically, to facilitate the animals' return passage, one or more automatic gates, here exemplified by 421 and 422, may be arranged in the passage way, which automatic gates are configured to exclusively allow animals wearing an authorized transponder, e.g. in the form of an ear tag, to enter a specific one of the stall areas 411, 412, 413 and 414. Thereby, different groups of animals GA can be mixed in the exit passage 310 and the passage way without risking that animals end up in an erroneous stall area.

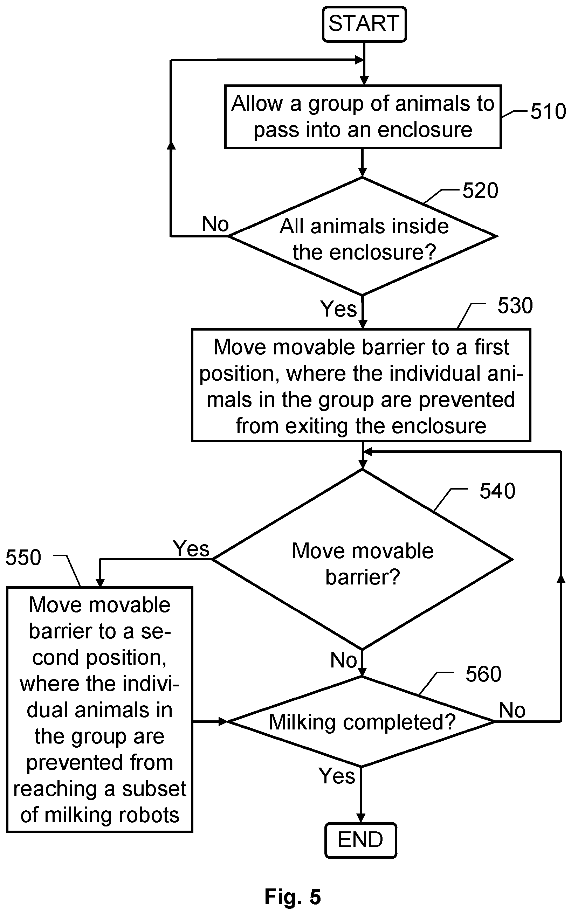

In order to sum up, and with reference to the flow diagram in Figure 5, we will now describe the method for performing batchwise milking of a group of animals per batch.

In a first step 510, a group of animals GA is allowed into an enclosure 120 adjoining a set of milking robots, for example RR1 or RR3 as exemplified in Figures 1 and 3 respectively. The enclosure 120 provides access for individual animals in the group of animals GA to each milking robot in the set of milking robots on a voluntary basis.

A step 520 after step 510 checks if all the animals in the group of animals GA have entered into the enclosure 120. If it is found that all of said animals are not yet present inside the enclosure 120, the procedure loops back to step 510; and other wise, a step 530 follows.

In step 530, a movable barrier 110 is moved over the enclosure 120 in a first direction thus compelling the individual animals in the group of animals GA to move in the first direction D1 relative to the set of milking robots. To this aim, the movable barrier 110 preferably extends across a full width of the enclosure 120. The movable barrier 110 is stopped in a first position where it prevents the individual animals in the group of animals GA from exiting the enclosure 120 without passing one of the milking robots in the set of milking robots.

In a subsequent step 540, it is checked if the movable barrier 110 shall be moved, for example to allow another group of animals to enter the enclosure 120 downstream of the movable barrier 110; and if so, a step 550 follows. Otherwise, the procedure continues to a step 560.

In step 550, the movable barrier 110 is moved further over the enclosure 120 in the first direction. The movable barrier 110 is stopped in a second position, where the individual animals in the group of animals GA are prevented from reaching a subset of the set of milking robots. Then, step 560 follows.

In step 560, it is checked if the milking has been completed with respect to a particular individual animal. If the milking has not yet been completed, the procedure loops back to step 540; and otherwise, the procedure ends for that animal. When the procedure has ended for all individual animals in the group of animals GA, the entire group of animals GA has been allowed to return to a stall area, where the animals rest and feed between milking sessions.

Preferably, in practice, when the procedure ends for the group of animals GA another group of animals is allowed into the enclosure, either at this point in time, or when/if the movable barrier is moved to the second position in accordance with the above step 550.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A milking installation configured to perform batchwise milking of a group of animals (GA) per batch, the milking installation comprising:
a set of milking robots (RR1; RR3) adjoining an enclosure (120) for the group of animals (GA) from which enclosure (120) individual animals in the group of animals (GA) are provided access to each milking robot (R₁₁, ..., R₅₂; R₁₁₁, ..., R₁₃₆) in the set of milking robots (RR1; RR3) on a voluntary basis, and
a movable barrier (110) configured to move in a first direction (D1) over the enclosure (120) so as to compel the individual animals in the group of animals (GA) to move in the first direction (D1) relative to the set of milking robots (RR1; RR3),
wherein the milking robots (R₁₁, ..., R₅₂; R₁₁₁, ..., R₁₃₆) in the set of milking robots (RR1; RR3) are arranged along at least one straight line (L1; L11, L12, L13) and the movable barrier (110) is configured to take different positions at the enclosure (120) so as to in at least one of said positions prevent the individual animals in the group of animals (GA) from reaching at least one milking robot (R₁₁, ..., R₅₂; R₁₁₁, ..., R₁₃₆) in the set of milking robots (RR1; RR3), wherein
the movable barrier (110) extends across a full width (W) of the enclosure (120), and
in a first position (P11, P31), the movable barrier (110) is configured to prevent the individual animals in the group of animals (GA) from exiting the enclosure (120) without passing one of the milking robots (R₁₁, ..., R₅₂; R₁₁₁, ..., R₁₃₆) in the set of milking robots (RR1; RR3), wherein in a second position (P12, P32), the movable barrier (110) is configured to prevent the individual animals in the group of animals (GA) from accessing a first subset (R₁₁, ..., R₂₂; R₁₁₁, R₁₁₂, R₁₃₅, R₁₃₆) of the set of milking robots (RR1; RR3), the second position (P12, P32) being located downstream of the first position (P11, P31) with respect to the first direction (D1), wherein in a third position (P13, P33), the movable barrier (110) is configured to prevent the individual animals in the group of animals (GA) from accessing a second subset (R₁₁, ..., R₄₂; R₁₁₁, ..., R₁₁₅, R₁₃₂ ... , R₁₃₆) of the set of milking robots (RR1; RR3), which second subset comprises the first subset, and which third position (P13, P33) is located downstream of the second position (P12, P32) with respect to the first direction (D1), and wherein a complementary set (R₅₁, R₅₂; R₁₂₁, R₁₂₂) to the second subset of the set of milking robots (RR1; RR3) comprises at least one milking robot (R₅₁, R₅₂; R₁₁₆, R₁₂₁, R₁₂₂, R₁₃₁) that is located downstream of the movable barrier (110) when the movable barrier (110) takes the third position (P13, P33) and that is configured to process extracted milk according to a special routine different from a standard routine applied by the milking robots in the second subset to process extracted milk.

2. The milking installation according to claim 1, wherein the special routine involves at least one of:
taking a milk sample for analysis, and
forwarding the extracted milk to a storage tank physically separated from a storage tank to which the extracted milk is forwarded according to the standard routine.

3. The milking installation according to any one of the preceding claims, wherein the movable barrier (110) is configured to move in a second direction (D2) over the enclosure (120), which second direction (D2) is opposite to the first direction (D1).

4. The milking installation according to any one of the preceding claims, wherein the movable barrier (110) is configured to be raised to an elevated position (Pₑ); and when the movable barrier (110) is raised to the elevated position, the individual animals in the group of animals (GA) are allowed pass freely under the movable barrier (110).

5. The milking installation according to claims 3 and 4, wherein the movable barrier (110) is configured to move in the second direction (D2) over the enclosure (120) when the movable barrier (110) is raised to the elevated position (Pₑ).

6. The milking installation according to any one of the preceding claims, wherein the movable barrier (110) is configured to be moved in the first direction (D1) in response to at least one of manual handling by an operator and an automatic action effected by a drive mechanism.

7. The milking installation according to any one of the preceding claims comprising an exit passage (310) connected to each milking robot (R₁₁, ..., R₅₂; R₁₁₁, ..., R₁₃₆) in the set of milking robots (RR1; RR3), which exit passage (310) allows the individual animals in the group of animals (GA) to leave the milking robots after completed milk extraction without re-entering the enclosure (120).

8. The milking installation according to any one of the preceding claims, wherein the enclosure (120) is connected to at least one stall area (411, 412, 413, 414) so as to allow animals to pass from the at least one stall area (411, 412, 413, 414) to the enclosure (120).

9. The milking installation according to claims 7 and 8, wherein the exit passage (310) is further connected to the at least one stall area (411, 412, 413, 414) so as to allow the group of animals (GA) to move to the at least one stall area (411, 412, 413, 414) after having completed milk extraction via the set of milking robots (RR1; RR3).

## Patentansprüche

1. Melkanlage, die konfiguriert ist, um ein chargenweises Melken einer Gruppe von Tieren (GA) pro Charge durchzuführen, wobei die Melkanlage umfasst:
einen Satz von Melkrobotern (RR1; RR3) angrenzend an ein Gehege (120) für die Gruppe von Tieren (GA), wobei aus diesem Gehege (120) einzelnen Tieren in der Gruppe von Tieren (GA) Zugang zu jedem Melkroboter (R₁₁, ..., R₅₂; R₁₁₁, ..., R₁₃₆) in dem Satz von Melkrobotern (RR1; RR3) auf freiwilliger Basis bereitgestellt wird, und
eine bewegbare Sperre (110), die konfiguriert ist, um sich in einer ersten Richtung (D1) über das Gehege (120) zu bewegen, um die einzelnen Tiere in der Gruppe von Tieren (GA) zu zwingen, sich in der ersten Richtung (D1) relativ zu dem Satz von Melkrobotern (RR1; RR3) zu bewegen, wobei die Melkroboter (R₁₁, ..., R₅₂; R₁₁₁, ..., R₁₃₆) in dem Satz von Melkrobotern (RR1; RR3) entlang mindestens einer geraden Linie (L1; L11, L12, L13) angeordnet sind und die bewegbare Sperre (110) konfiguriert ist, um verschiedene Positionen an dem Gehege (120) einzunehmen, um in mindestens einer der Positionen die einzelnen Tiere in der Gruppe von Tieren (GA) daran zu hindern, mindestens einen Melkroboter (R₁₁, ..., R₅₂; R₁₁₁, ..., R₁₃₆) in dem Satz von Melkrobotern (RR1; RR3) zu erreichen, wobei
sich die bewegbare Sperre (110) über eine gesamte Breite (W) des Geheges (120) erstreckt, und
die bewegbare Sperre (110) in einer ersten Position (P11, P31) konfiguriert ist, um die einzelnen Tiere in der Gruppe von Tieren (GA) daran zu hindern, das Gehege (120) zu verlassen, ohne an einem der Melkroboter (R₁₁, ..., R₅₂; R₁₁₁, ..., R₁₃₆) in dem Satz von Melkrobotern (RR1; RR3) vorbeizugehen, wobei die bewegbare Sperre (110) in einer zweiten Position (P12, P32) konfiguriert ist, um die einzelnen Tiere in der Gruppe von Tieren (GA) daran zu hindern, Zugang zu einem ersten Teilsatz (R₁₁, ..., R₂₂; R₁₁₁, R₁₁₂, R₁₃₅, R₁₃₆) des Satzes von Melkrobotern (RR1; RR3) zu haben, wobei sich die zweite Position (P12, P32) stromabwärts von der ersten Position (P11, P31) in Bezug auf die erste Richtung (D1) befindet, wobei die bewegbare Sperre (110) in einer dritten Position (P13, P33) konfiguriert ist, um die einzelnen Tiere in der Gruppe von Tieren (GA) daran zu hindern, Zugang zu einem zweiten Teilsatz (R₁₁, ..., R₄₂; R₁₁₁, ..., R₁₁₅, R₁₃₂, ..., R₁₃₆) des Satzes von Melkrobotern (RR1; RR3) zu haben, wobei der zweite Teilsatz den ersten Teilsatz umfasst, und wobei sich die dritte Position (P13, P33) stromabwärts der zweiten Position (P12, P32) in Bezug auf die erste Richtung (D1) befindet, und wobei ein komplementärer Satz (R₅₁, R₅₂; R₁₂₁, R₁₂₂) zu dem zweiten Teilsatz des Satzes von Melkrobotern (RR1; RR3) mindestens einen Melkroboter
(R₅₁, R₅₂; R₁₁₆, R₁₂₁, R₁₂₂, R₁₃₁) umfasst, der sich stromabwärts der bewegbaren Sperre (110) befindet, wenn die bewegbare Sperre (110) die dritte Position (P13, P33) einnimmt, und der konfiguriert ist, um gewonnene Milch gemäß einer speziellen Routine zu verarbeiten, die sich von einer Standardroutine unterscheidet, die von den Melkrobotern in dem zweiten Teilsatz angewendet wird, um gewonnene Milch zu verarbeiten.

2. Melkanlage nach Anspruch 1, wobei die spezielle Routine mindestens eines der Folgenden umfasst:
Entnehmen einer Milchprobe zur Analyse, und
Weiterleiten der gewonnenen Milch zu einem Lagertank, der physisch von einem Lagertank getrennt ist, zu dem die gewonnene Milch gemäß der Standardroutine weitergeleitet wird.

3. Melkanlage nach einem der vorstehenden Ansprüche, wobei die bewegbare Sperre (110) konfiguriert ist, um sich in einer zweiten Richtung (D2) über das Gehege (120) zu bewegen, wobei die zweite Richtung (D2) der ersten Richtung (D1) entgegengesetzt ist.

4. Melkanlage nach einem der vorstehenden Ansprüche, wobei die bewegbare Sperre (110) konfiguriert ist, um in eine erhöhte Position (Pₑ) angehoben zu werden; und wenn die bewegbare Sperre (110) in die erhöhte Position angehoben wird, den einzelnen Tieren in der Gruppe von Tieren (GA) ermöglicht wird, frei unter der bewegbaren Sperre (110) hindurchzugehen.

5. Melkanlage nach den Ansprüchen 3 und 4, wobei die bewegbare Sperre (110) konfiguriert ist, um sich in der zweiten Richtung (D2) über das Gehege (120) zu bewegen, wenn die bewegbare Sperre (110) in die erhöhte Position (Pₑ) angehoben wird.

6. Melkanlage nach einem der vorstehenden Ansprüche, wobei die bewegbare Sperre (110) konfiguriert ist, um in der ersten Richtung (D1) als Reaktion auf mindestens eines von manueller Handhabung durch einen Bediener und einer automatischen Aktion, die durch einen Antriebsmechanismus bewirkt wird, bewegt zu werden.

7. Melkanlage nach einem der vorstehenden Ansprüche, umfassend einen Ausgangsdurchgang (310), der mit jedem Melkroboter (R₁₁, ..., R₅₂; R₁₁₁, ..., R₁₃₆) in dem Satz von Melkrobotern (RR1; RR3) verbunden ist, wobei der Ausgangsdurchgang (310) es den einzelnen Tieren in der Gruppe von Tieren (GA) ermöglicht, die Melkroboter nach abgeschlossener Milchgewinnung zu verlassen, ohne das Gehege (120) wieder zu betreten.

8. Melkanlage nach einem der vorstehenden Ansprüche, wobei das Gehege (120) mit mindestens einem Stallbereich (411, 412, 413, 414) verbunden ist, um es Tieren zu ermöglichen, von dem mindestens einen Stallbereich (411, 412, 413, 414) zu dem Gehege (120) zu gehen.

9. Melkanlage nach den Ansprüchen 7 und 8, wobei der Ausgangsdurchgang (310) ferner mit dem mindestens einen Stallbereich (411, 412, 413, 414) verbunden ist, um es der Gruppe von Tieren (GA) zu ermöglichen, sich zu dem mindestens einen
Stallbereich (411, 412, 413, 414) zu bewegen, nachdem die Milchgewinnung über den Satz von Melkrobotern (RR1; RR3) abgeschlossen wurde.

## Revendications

1. Installation de traite conçue destinée à mettre en œuvre par lots une traite d'un groupe d'animaux (GA) par lot, l'installation de traite comprenant :
un ensemble de robots de traite (RR1 ; RR3) attenant à une enceinte (120) pour le groupe d'animaux (GA), enceinte (120) à partir de laquelle des animaux individuels dans le groupe d'animaux (GA) reçoivent un accès à chaque robot de traite (R₁₁, R₅₂ ; R₁₁₁, R₁₃₆) dans l'ensemble de robots de traite (RR1 ; RR3) sur une base volontaire, et
une barrière déplaçable (110) conçue pour se déplacer dans une première direction (D1) par-dessus l'enceinte (120) de façon à imposer aux animaux individuels dans le groupe d'animaux (GA) de se déplacer dans la première direction (D1) par rapport à l'ensemble de robots de traite (RR1 ; RR3),
dans laquelle les robots de traite (R₁₁, ..., R₅₂ ; R₁₁₁, ..., R₁₃₆) dans l'ensemble de robots de traite (RR1 ; RR3) sont agencés le long d'au moins une ligne droite (L1 ; L11, L12, L13) et la barrière déplaçable (110) est conçue pour prendre différentes positions au niveau de l'enceinte (120) de façon à, dans au moins l'une desdites positions, empêcher les animaux individuels dans le groupe d'animaux (GA) d'atteindre au moins un robot de traite (R₁₁, ..., R₅₂ ; R₁₁₁, ..., R₁₃₆) dans l'ensemble de robots de traite (RR1 ; RR3), dans laquelle
la barrière déplaçable (110) s'étend à travers une largeur complète (W) de l'enceinte (120), et
dans une première position (P11, P31), la barrière déplaçable (110) est conçue pour empêcher les animaux individuels dans le groupe d'animaux (GA) de sortir de l'enceinte (120) sans traverser l'un des robots de traite (R₁₁, ..., R₅₂ ; R₁₁₁, ..., R₁₃₆) dans l'ensemble de robots de traite (RR1 ; RR3), dans laquelle dans une deuxième position (P12, P32), la barrière déplaçable (110) est conçue pour empêcher les animaux individuels dans le groupe d'animaux (GA) d'accéder à un premier sous-ensemble (R₁₁, ..., R₂₂ ; R₁₁₁, R₁₁₂, R₁₃₅, R₁₃₆) de l'ensemble de robots de traite (RR1 ; RR3), la deuxième position (P12, P32) étant localisée en aval de la première position (P11, P31) par rapport à la première direction (D1), dans laquelle dans une troisième position (P13, P33), la barrière déplaçable (110) est conçue pour empêcher les animaux individuels dans le groupe d'animaux (GA) d'accéder à un second sous-ensemble (R₁₁, ..., R₄₂ ; R₁₁₁, ... , R₁₁₅, R₁₃₂, ..., R₁₃₆) de l'ensemble de robots de traite (RR1 ; RR3), ce second sous-ensemble comprenant le premier sous-ensemble, et cette troisième position (P13, P33) étant localisée en aval de la deuxième position (P12, P32) par rapport à la première direction (D1), et dans laquelle un ensemble complémentaire (R₅₁, R₅₂ ; R₁₂₁, R₁₂₂) au second sous-ensemble de l'ensemble de robots de traite (RR1 ; RR3) comprend au moins un robot de traite (R₅₁, R₅₂ ; R₁₁₆, R₁₂₁, R₁₂₂, R₁₃₁) qui est localisé en aval de la barrière déplaçable (110) lorsque la barrière déplaçable (110) prend la troisième position (P13, P33) et qui est conçu pour traiter du lait extrait selon une routine spéciale différente d'une routine standard appliquée par les robots de traite dans le second sous-ensemble pour traiter du lait extrait.

2. Installation de traite selon la revendication 1, dans laquelle la routine spéciale implique au moins l'un parmi :
le fait de prendre un échantillon de lait pour analyse, et
l'acheminement du lait extrait vers un réservoir de stockage physiquement séparé d'un réservoir de stockage auquel le lait extrait est acheminé selon la routine standard.

3. Installation de traite selon l'une quelconque des revendications précédentes, dans laquelle la barrière déplaçable (110) est conçue pour se déplacer dans une seconde direction (D2) par-dessus l'enceinte (120), cette seconde direction (D2) étant opposée à la première direction (D1).

4. Installation de traite selon l'une quelconque des revendications précédentes, dans laquelle la barrière déplaçable (110) est conçue pour être levée à une position surélevée (Pₑ) ; et lorsque la barrière déplaçable (110) est levée à la position surélevée, les animaux individuels dans le groupe d'animaux (GA) sont autorisés à passer librement sous la barrière déplaçable (110).

5. Installation de traite selon les revendications 3 et 4, dans laquelle la barrière déplaçable (110) est conçue pour se déplacer dans la seconde direction (D2) par-dessus l'enceinte (120) lorsque la barrière déplaçable (110) est levée à la position surélevée (Pₑ).

6. Installation de traite selon l'une quelconque des revendications précédentes, dans laquelle la barrière déplaçable (110) est conçue pour être déplacée dans la première direction (D1) en réponse à au moins l'une parmi une manipulation manuelle par un opérateur et une action automatique effectuée par un mécanisme d'entraînement.

7. Installation de traite selon l'une quelconque des revendications précédentes comprenant un passage de sortie (310) relié à chaque robot de traite (R₁₁, ..., R₅₂ ; R₁₁₁, ..., R₁₃₆) dans l'ensemble de robots de traite (RR1 ; RR3), ce passage de sortie (310) permettant aux animaux individuels dans le groupe d'animaux (GA) de quitter les robots de traite après avoir achevé une extraction de lait sans entrer à nouveau dans l'enceinte (120).

8. Installation de traite selon l'une quelconque des revendications précédentes, dans laquelle l'enceinte (120) est reliée à au moins une zone de stalle (411, 412, 413, 414) de façon à permettre à des animaux de passer de l'au moins une zone de stalle (411, 412, 413, 414) à l'enceinte (120).

9. Installation de traite selon les revendications 7 et 8, dans laquelle le passage de sortie (310) est en outre relié à l'au moins une zone de stalle (411, 412, 413, 414) de façon à permettre au groupe d'animaux (GA) de se déplacer vers l'au moins une zone de stalle (411, 412, 413, 414) après avoir achevé une extraction de lait par l'intermédiaire de l'ensemble de robots de traite (RR1 ; RR3).
